(19)

Europäisches
Patentamt
European
Patent Office
Office européen
des brevets

(11) **EP 2 184 589 A1**

(12) **EUROPEAN PATENT APPLICATION**

(43) Date of publication:
**12.05.2010 Bulletin 2010/19**

(51) Int Cl.:
*G01F 1/696* (2006.01)     *G01F 15/06* (2006.01)
*G01F 25/00* (2006.01)

(21) Application number: **08019590.2**

(22) Date of filing: **10.11.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Sensirion AG**<br>**8712 Stäfa (CH)** | (72) Inventors:<br>• **Kanne, Ulf**<br>  **8008 Zürich (CH)**<br>• **Horn, Jonas**<br>  **8634 Hombrechtikon (CH)**<br><br>(74) Representative: **Sutter, Kurt et al**<br>**E. Blum & CO. AG**<br>**Vorderberg 11**<br>**8044 Zürich (CH)** |

(54)     **A method and an assembly for measuring a flow**

(57)     The flow of a fluid, in particular for medical applications, is measured by means of a fluid flow sensor (1). Calibration data is stored e.g. as a barcode (25) printed onto the housing (15) of the fluid sensor (1) or on a separate calibration data carrier. A reader device (10) is used to read the calibration data and transfer it to a control unit (5). The control unit (5) applies the calibration data for converting raw signals measured by the flow sensor (1) to flow signals. The same reader device (10) can be used for reading a data carrier (30) containing specific properties of the fluid to be used, such that these properties can be taken into account by control unit (5) when converting the raw signal from the flow sensor (1). This system allows to build the sensor in very simple manner and therefore to reduce its costs, which is of particular advantage in disposable applications.

Fig. 2

## Description

Technical Field

The invention relates to a method as well as to an assembly for measuring a flow of a fluid by means of a flow sensor and calibration data, in particular for medical applications.

Background Art

It has been known to measure the flow of a fluid by means of various types of flow sensors. Most of such flow sensors provide a raw signal that has to be converted to a flow signal (i.e. a flow value) by means of calibration data in a signal conditioning process.

DE 101 29 300 describes a flow sensor of this type that comprises an integrated MEMS device on a substrate having a heater arranged between two temperature sensors. A flow over the heater will lead to a temperature difference over the temperature sensors. The temperature difference is used as a raw signal and converted to a flow signal by means of calibration data stored in digital circuitry integrated on the substrate.

However, this type of device, which requires integrated digital circuitry and a large memory for carrying out signal conditioning, can be comparatively expensive. This can be an important drawback, in particular for a disposable device that is used only once. Such disposable devices are e.g. common in medical applications, e.g. for controlling or monitoring the flow of gases or agents. Drug delivery systems are expected to make use of such techniques in the future.

Alternatively, the flow sensor itself can be built in very simple manner, without built-in memory and signal conditioning means, in which case signal conditioning has to be carried out in an external control unit connected to the flow sensor. This allows to reduce the costs of the flow sensor itself, but requires to calibrate the control unit to the specific flow sensor it is connected to. This, in turn, requires additional steps that lead to additional costs.

Disclosure of the Invention

Hence, the problem to be solved by the invention is to provide a method and assembly that allow to reduce the costs of such measurements.

This problem is solved by the independent claims. Accordingly, a calibration data carrier is provided for each flow sensor. The calibration data carrier carries the calibration data of the flow sensor and can be read out in contact-less manner by means of a reader device. Hence, the user of the system can install the flow sensor and read its calibration data from the calibration data carrier in simple manner. The calibration data is then electronically transferred to the control unit, which can used for converting the raw signal from the flow sensor to the desired flow signal in a signal conditioning step.

Advantageously, the flow sensor comprises a housing carrying sensor data readable by the reader device.

This sensor data on the housing can e.g. comprise the complete calibration data, such that the calibration data carrier is formed by the housing of the sensor itself. This allows a secure attribution of calibration data and flow sensor, making it impossible to attribute the wrong calibration data to a given sensor.

In another advantageous embodiment, a sensor identifier can be stored in or on the flow sensor, e.g. in the "sensor data" on its housing as mentioned above. The identifier is unique to each sensor and is also stored on the calibration data carrier. When reading out the identifier stored in or on the flow sensor as well as the identifier stored on the calibration data carrier, the control unit can compare the two identifiers in order to ensure that a given calibration data carrier is attributed to a given flow sensor.

Brief Description of the Drawings

The invention will be better understood and objects other than those set forth above will become apparent when consideration is given to the following detailed description thereof. Such description makes reference to the annexed drawings, wherein:

Fig. 1 shows a block diagram of part of an assembly for measuring the flow of a fluid,
Fig. 2 shows a view of the components of an assembly, and
Fig. 3 shows an alternative embodiment of the assembly.

Modes for Carrying Out the Invention

Definitions:

Reading out calibration data in "contact-less" manner from a carrier is understood as a reading operation where the reader device does not have to come into physical or direct electrical contact with the carrier. In particular, such an operation can be achieved by providing optically readable information on the carrier and scanning the same optically, or by providing an RF-ID tag on said carrier and reading out the same by means of RF signals.

A "one- or two-dimensional barcode" designates any one- or two-dimensional pattern encoding digital information in standardized manner and suited for being scanned by an electronic optical reader device. Such a barcode may e.g. be a so-called "Code 128" or "Code 93" one-dimensional barcode, or e.g. an "Aztec code" or "DataMatrix 2D" two-dimensional barcode. These and other barcode standards are known to the skilled person.

"Calibration" is a process allowing to determine the individual parameters of a sensor, e.g. to compensate for manufacturing tolerances. The results of a calibration are stored as "calibration data".

The term "raw signal" designates any signal from the flow sensor that has not yet been subjected to a transformation based on the calibration data. The raw signal can e.g. be an analogue signal directly derived from the temperature sensors, an amplified or digitized version thereof, or even a signal that has already undergone preliminary non-linear data processing steps.

"Signal conditioning" is the process required to convert the raw signal to a flow value. This includes the transformation of the raw signal using the calibration data as well as e.g. temperature information. It typically also includes a linearization step.

Block diagram:

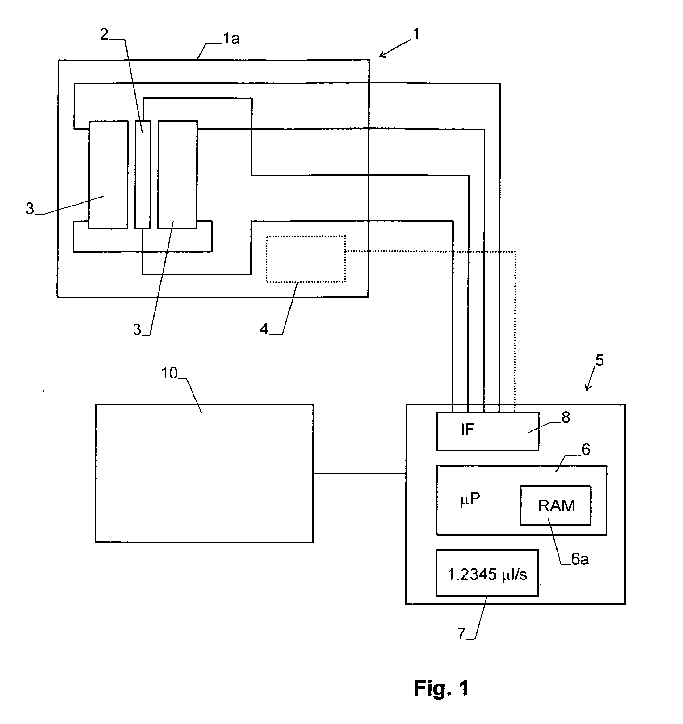

Fig. 1 shows some of the key components of an embodiment of an assembly for measuring the flow of a fluid.

The assembly comprises a flow sensor 1 integrated on a flow sensor chip 1a. Flow sensor 1 is advantageously a thermal flow sensor comprising a heater 2 and at least one temperature sensor 3. A flow over the heater 2 changes the temperature and temperature distribution in the region around the heater, which, in turn, can be measured by the temperature sensor(s) 3 in order to generate a raw signal.

To keep costs low, heater 2 and temperature sensor(s) can be integrated components on a MEMS device.

An advantageous embodiment of such a device is described in DE 101 29 300. As shown in Fig. 10 of that document, it comprises a heater and two temperature sensors arranged on a substrate, advantageously a semiconductor substrate. The temperature sensors are thermopiles and are interconnected such that the raw signal corresponds to the temperature difference before and after the heater.

When in use, a data connection between the flow sensor 1 and a control unit 5 is established. This data connection is capable of at least sending analog and/or digital data from flow sensor 1 to control unit 5, and it can e.g. be a direct electrical connection between flow sensor 1 and control unit 5 or a wireless connection. Advantageously, the data connection is bidirectional, allowing control unit 5 to also send signals, such as commands, to sensor 1. Control unit 5 e.g. comprises a microprocessor system 6 with a memory 6a, a display 7 and an interface 8. Display 7 can, for example, be used to display the actual flow, e.g. in volumes/second or weight/second. Interface 8 is used for interfacing with flow sensor 1.

The assembly further comprises a reader device 10, which can e.g. be a device for reading one- or two-dimensional barcodes.

In the embodiment of Fig. 1, flow sensor 1 substantially consists of heater 2 and the temperature sensors 3. It must be noted, however, that it can also comprise further components, such as simple amplifiers, an A/D-converter or even more advanced analog and/or digital processing circuitry, albeit these circuitry should advantageously be simple and small, in particular for disposable applications, in order to keep costs at a minimum.

Optionally, and as indicated in dotted lines, an identifier memory 4 can be integrated on flow sensor 1. Identifier memory 4 is a digital memory storing a unique sensor identifier attributed to the sensor. Identifier memory 4 can be read out by control unit 5 for purposes described below.

Flow sensor 1 can also comprise further sensor elements, such as a temperature sensor for measuring the temperature of the fluid and/or of the substrate. Such additional sensors can be used to obtain more accurate flow results, as it is known to the skilled person.

The assembly, first embodiment:

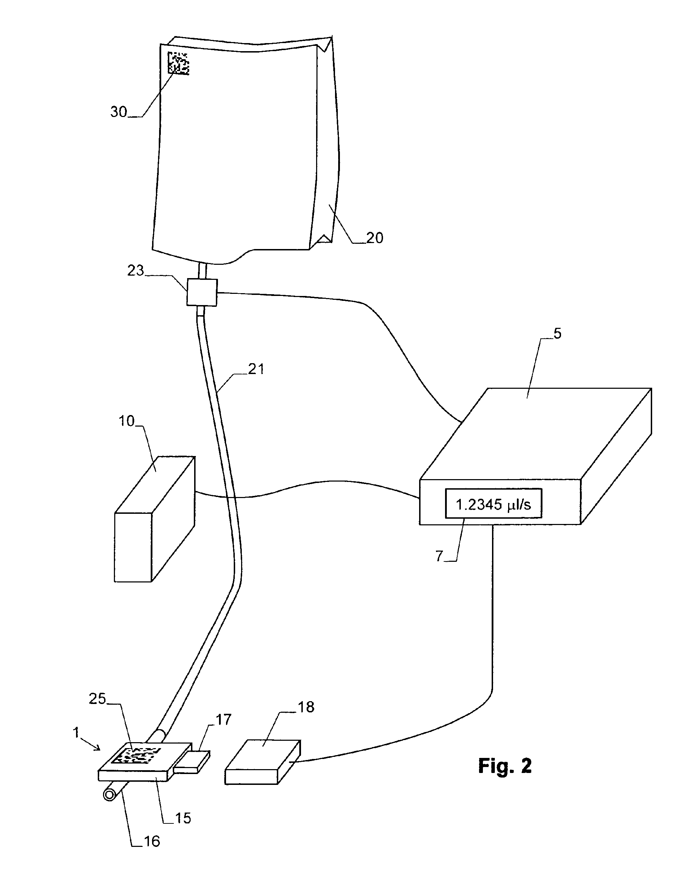

A first embodiment of the most important parts of the complete assembly is shown, schematically, in Fig. 2.

As can be seen, flow sensor 1 is arranged in a housing 15, which may e.g. be directly cast around the substrate of the MEMS device mentioned above, or it may be a larger housing surrounding a protective housing cast about the MEMS device. Housing 15 can be connected to or can form a duct 16, in which the flow of the fluid is to be measured. Flow sensor 1 further comprises a connector 17 for releasably connecting it to control unit 5, e.g. by means of mating plug 18. Alternatively, a wireless interface between flow sensor 1 and control unit 5 can be provided.

The assembly of Fig. 2 further shows a fluid container 20, which e.g. contains a medical fluid. A tube 21 connects fluid container 20 and flow sensor 1. In Fig. 2, fluid container 20 is shown to be a bag, but it can e.g. also be a local gas bottle or a central gas reservoir.

The system further comprises a fluid pump or fluid valve, as schematically shown under reference number 23, used for conveying the fluid or controlling its flow in tube 21. Fluid pump or valve 23 can be controlled by control unit 5.

As it will be clear to the skilled person, fluid pump or valve 23 can be mounted at any suitable point along the fluid duct. It may be directly connected to container 20 and/or to flow sensor 1, or flow sensor 1 can be inserted into a suitable sensor section of fluid pump or valve 23. Also, fluid pump or valve 23 can be located in the same housing as control unit 5, or it can, as shown in Fig. 2, have its own housing. Similarly, flow sensor 1 can be (releasably) mounted to control unit 5, or the connection can be established through a cable as shown in Fig. 2.

Operation:

As mentioned above, flow sensor 1 needs to be calibrated. Such a calibration is e.g. carried out by a manufacturer or distributor of the flow sensors, but not by the end-user.

For example, flow sensor 1 can be calibrated by making a plurality of calibration measurements at "real" flow values f1, f2, ... fN using a reference fluid. For this purpose, the "real" flow values can e.g. be measured and/or controlled by a reference sensor, which has already been calibrated or which operates on a different principle of measurement.

For each real flow value f1, ... fN, the corresponding raw signal s1, ... sN is determined as it is generated by the sensor.

The data set comprising the real flow values f1, ... fN as well as the corresponding raw signals s1, ... sN can then be used as calibration data for the sensor.

The signal conditioning, e.g. the conversion of a measured raw signal s to the corresponding flow value f(s) can be carried out in various manner:

> 1) In a simple approach, interpolation can be used, e.g. linear interpolation, quadratic interpolation, spline interpolation, for calculating f(s) from the raw signals s1, ... sN and the corresponding flow values f1, ... fN. In that case, the values s1, ... sN and f1, ... fN can be used as calibration data. If the real flow values f1, ... fN are the same during calibration of all sensors, they may be omitted from the calibration data and fixedly stored in control unit 5.
> 2) In a more advanced approach, a model function F having parameters p1 ... pK can be used for calculating the flow value from the raw signal. Function F can e.g. be an empirically or analytically derived function. In that case, the flow value f(s) can be calculated using

$$f(s) = F(p1 \; \ldots \; pK, \; s).$$

The parameters p1 ... pK can be obtained using a fitting process based on the values s1, ... sN and f1, ... fN as known to the skilled person. In that case, the calibration data advantageously comprises the parameters p1 ... pK.

In the embodiment of Fig. 2, the calibration data is encoded on a bar code 25 applied to housing 15, e.g. by directly marking the housing, e.g. using ink printing or laser engraving techniques. Alternatively, a tag carrying the bar code 25 can be glued to the housing. In all these cases, housing 15 acts as a "calibration data carrier" carrying the calibration data of the sensor on its surface, i.e. the calibration data is stored on the housing.

When a given flow sensor 1 is to be used in the assembly of Fig. 2, it is mechanically connected to the fluid duct, i.e. to tube 21, and it is electrically connected to control unit 5. Reader device 10 is used to read out the calibration data in bar code 25, in contact-less manner, by scanning. The calibration data is electronically transferred to memory 6a of control unit 5 and stored therein.

Once the fluid starts to flow, control unit 5 reads the raw signal from sensor 1 through interface 8. It then uses the calibration data stored in memory 6a for converting the raw data to a flow value.

If the calibration data comprises the real flows f1, ... fN and the raw signals s1, ... sN as mentioned above, these data can be used for calculating the flow f (s) for a given raw signal s by means of interpolation. If the calibration data comprises the parameters p1 ... pK of the model function F mentioned above, the model function F can be used for calculating the flow f(s).

If the fluid in container 20 has substantially the same thermal and mechanical properties as the reference fluid that was used during the calibration, no further information is required for calculating the flow value from the raw signal.

If, however, the fluid in container 20 may have thermal and/or mechanical properties different from those of the calibration fluid, it is advantageous to provide a "fluid property data carrier" that carries "fluid data" which are indicative of the relevant physical properties of the fluid, such as its density, thermal capacitance and thermal conductance. In the embodiment of Fig. 2, the "fluid data carrier" is the container 20 itself, which carries a barcode 30. Barcode 30 encodes the fluid data, such as the properties mentioned above. Alternatively, it can simply comprise an fluid identifier, which is a unique identifier attributed to each type of fluid that may be used in the assembly. If the fluid container is a central gas reservoir e.g. in a hospital, from which pipes lead to outlets in various rooms of a building, the fluid data carrier may e.g. be affixed to each outlet, or the fluid data can be entered manually into control unit 5.

Barcode 30 is read out by the same reader device 10 as barcode 25, which greatly simplifies the handling procedure for the personnel involved. Control unit 5 extracts the physical properties of the fluid from the fluid data encoded therein, either directly or by means of a lookup-table that connects the fluid identifier as mentioned above to its physical properties - such a lookup-table can either be stored in control unit 5 directly, or on a central server accessed by control unit 5.

The physical properties of the fluid can then be used to calculate the flow, together with the calibration data of sensor 1. Methods for doing so are known to the skilled person and are e.g. described in T.S.J. Lammerink et a1, Sensors and Actuators A, 37 - 38 (1993) 45 - 50.

The assembly, second embodiment:

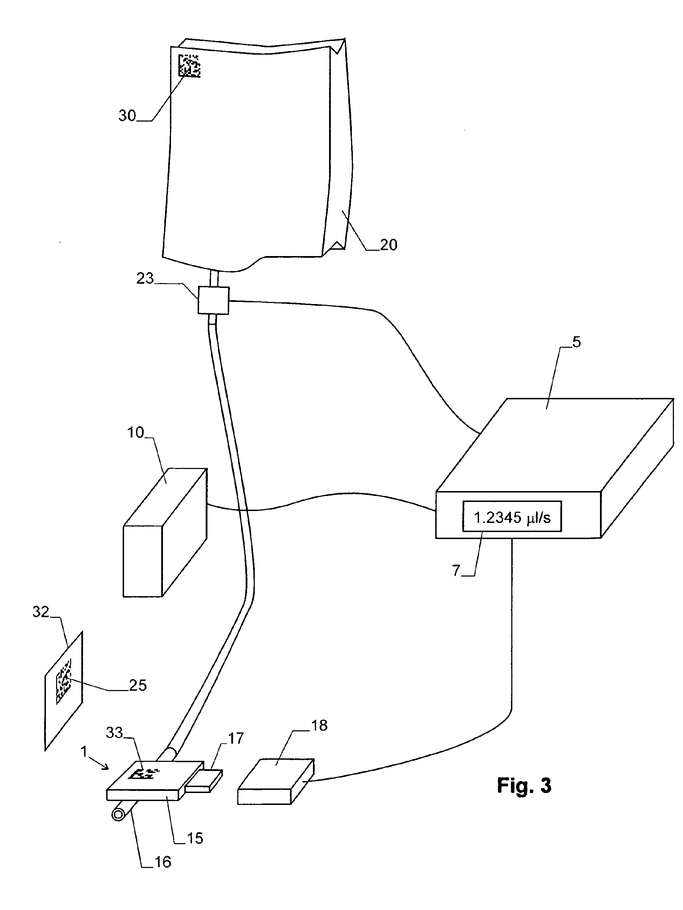

> The embodiment shown in Fig. 3 differs from the one of Fig. 2 in that the calibration data is not stored on housing 15, but rather on a calibration data carrier 32 separate from (i.e. not physically connected to) housing 15, e.g. again as a barcode 25. Calibration data carrier 32 can e.g. be a paper sheet that comes packaged with flow sensor 1, or it can be printed on a packaging of flow sensor 1.

Reader device 10 is used to read the calibration data from calibration data carrier 32.

However, since there is now no direct physical connection between flow sensor 1 and data carrier 32, mistakes may occur and the wrong calibration data may e.g. be used for a given sensor. Hence, for applications where a high reliability is desired, a unique sensor identifier is attributed to each flow sensor 1. This identifier is stored in or on flow sensor 1. The sensor identifier is also stored on calibration data carrier 32, in barcode 25, so it can be read by reader device 10 together with the calibration data.

In the embodiment of Fig. 3, the sensor identifier is stored as a barcode 33 on housing 15 of flow sensor 1. It is also read by reader device 10. However, since the identifier can typically be encoded using a much smaller number of bits than the calibration data, barcode 33 may be smaller than barcode 25, such that it also fits on a very small sensor housing 15.

After reading out the identifiers stored in or on flow sensor 1 as well as on data carrier 32, control unit 5 can compare them for checking if the given calibration data carrier is the one that is attributed to the given flow sensor. If the identifiers do not match, an alert can be issued.

Alternatively to storing the sensor identifier on the surface of housing 15, the sensor identifier may also be stored electronically in flow sensor 1 itself, namely in identifier memory 4 mentioned above. In that case, control unit 5 can read the sensor identifier directly through interface 8, thereby obviating the need for scanning any sensor data on the outside of housing 15. Again, since the identifier can be stored in more compact manner than the calibration data, identifier memory 4 can be much smaller than a memory that would be required for holding the complete calibration data.

Notes:

As can be seen from a comparison of the embodiments of Figs. 2 and 3, housing 15 of flow sensor 1 can be used to carry sensor specific "sensor data", which can be read by reader device 10. Such sensor data can comprise complete calibration data (in which case housing 15 forms the calibration data carrier itself) or, if the calibration data is provided on a separate calibration data carrier, the sensor data stored on housing 15 can simply be the sensor identifier.

Using barcodes or other machine-readable codes that can be detected optically is particularly advantageous because such codes can be applied to the data carrier at low cost. However, as mentioned above, other contact-less means of storage, such as RFID tags, can be used as well.

The invention is particularly suited for medical applications, where reader devices 10 are already in use for scanning the equipment used during a given process. It therefore integrates well with such systems.

Since the flow sensor of the present invention can be very simple, its costs are low and it can be used as a disposable device. It can e.g. be discarded after a single use.

While there are shown and described presently preferred embodiments of the invention, it is to be distinctly understood that the invention is not limited thereto but may be otherwise variously embodied and practiced within the scope of the following claims.

## Claims

1. A method for measuring a flow of a fluid comprising the steps of

   providing a flow sensor (1),
   providing calibration data for said flow sensor (1),
   bringing said flow sensor (1) into contact with said flow and establishing a data connection from said flow sensor (1) to a control unit (5),
   reading a raw signal from said flow sensor (1) by means of the control unit (5) and converting said raw signal to a flow signal using said calibration data,
   **characterized by** the steps of
   providing said calibration data in contact-less readable manner on a calibration data carrier (15, 32), and
   reading out, in contact-less manner, said calibration data by means of a reader device (10) and electronically transferring said calibration data to said control unit (5).

2. The method of claim 1 wherein said calibration data is optically readable and is read out optically by said reader device (10).

3. The method of claim 2 wherein said calibration data is encoded in a one- or two-dimensional barcode (25) on said calibration data carrier (15, 32).

4. The method of any of the preceding claims further comprising the steps of
   making a plurality of calibration measurements by means of said flow sensor (1) at real flows $f_1, ... f_N$, and measuring the raw signals $s_1, ... s_N$ at said real flows $f_1 ... f_N$, and
   storing and said raw signals $s_1, ... s_N$ on said calibration data carrier (15, 32),

and in particular further comprising the step of storing said real flows f1, ... fN together with said raw signals s1, ... sN on said calibration data carrier (15, 32).

5. The method of claim 4 further comprising the step of reading out said raw signals s1, ... sN on said calibration data carrier (15, 32) by means of said reader device and using said real flows f1, ... fN and said raw signals s1, ... sN in said control unit (5) for converting a measured raw signal to a flow by means of interpolation.

6. The method of any of the claims 1 to 3 further comprising the steps of
making a plurality of calibration measurements by means of said flow sensor (1) at real flows f1, ... fN, and measuring the raw signals s1, ... sN at said real flows f1 ... fN,
fitting parameters p1 ... pK of a model function F (p1, ... pK, s), wherein said model function describes said flow as a function of said raw signal and said parameters, and
storing said parameters p1 ... pK on said calibration data carrier (15, 32).

7. The method of any of the preceding claims wherein said flow sensor (1) comprises a housing (15), and wherein said housing (15) carries sensor data, wherein said method comprises the step of reading said sensor data by means of said reader device (10).

8. The method of claim 7 wherein said housing (15) forms said carrier and wherein said sensor data comprises said calibration data.

9. The method of any of the preceding claims further comprising the steps of
storing, in or on said flow sensor (1), a sensor identifier attributed to said sensor,
storing, in or on said calibration data carrier (32), the identifier of the flow sensor (1) that the calibration data carrier (15, 32) is attributed to,
reading out the identifier stored in or on the flow sensor (1) as well as the identifier stored in or on the calibration data carrier (32), and comparing these identifiers for checking if a given calibration data carrier (32) is attributed to a given flow sensor (1).

10. The method of claim 9 wherein said identifier is stored in an identifier memory (4) integrated on said flow sensor (1).

11. The method of the claims 7 and 9 wherein said sensor data comprises said identifier.

12. The method of any of the preceding claims further comprising the steps of

providing a fluid property data carrier carrying fluid data indicative of physical properties of said fluid,
reading out, by means of said reader device (10), said fluid property data carrier,
using said fluid data, in said control unit (5), for calculating said flow.

13. An assembly for measuring a flow of a fluid comprising,
a flow sensor (1),
a reader device (10) for reading out data in contactless manner,
a control unit (5) for converting a raw signal measured by said sensor to a flow signal by means of calibration data,
said assembly further being **characterized by**
a calibration data carrier (15, 32) carrying said calibration data and readable by said reader device (10).

14. The assembly of claim 13 wherein said flow sensor (1) comprises an integrated flow sensor chip (1a) and a housing (15) surrounding said flow sensor chip (1a), wherein said housing (15) carries sensor data readable by said reader device (10).

15. The assembly of claim 14 wherein said sensor data comprises said calibration data and said housing (15) forms said calibration data carrier.

**Fig. 1**

**Fig. 2**

**Fig. 3**

Europäisches
Patentamt

European
Patent Office

Office européen
des brevets

# EUROPEAN SEARCH REPORT

Application Number

EP 08 01 9590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/029388 A1 (LIU JAMES Z [US] LIU JAMES Z T [US]) 8 February 2007 (2007-02-08) | 1-3,8, 12-15 | INV. G01F1/696 G01F15/06 G01F25/00 |
| Y | * paragraph [0016] * <br> * paragraph [0023] - paragraph [0025] * <br> * paragraph [0031]; figures 1,2 * | 4-7,9-11 | |
| A | US 5 792 951 A (ISMAIL RAOUF A [US] ET AL) 11 August 1998 (1998-08-11) * column 1, line 9 - line 37 * * column 2, line 44 - column 3, line 5 * | 1,13 | |
| Y | * column 3, line 66 - column 6, line 2; figures 1,4 * | 4-6,9-11 | |
| A | US 5 442 957 A (CARON RICHARD W [US]) 22 August 1995 (1995-08-22) | 1-3,13 | |
| Y | * column 2, line 37 - column 4, line 56; figures 1,2,5,6 * | 9-11 | |
| A | US 2006/155496 A1 (REPKO MARK A [US]) 13 July 2006 (2006-07-13) | 4-6 | TECHNICAL FIELDS SEARCHED (IPC) |
| Y | * paragraph [0019] - paragraph [0026]; figures 1,2 * | 7 | G01F |
| A | US 2008/267787 A1 (RUSH BENJAMIN M [US]) 30 October 2008 (2008-10-30) * paragraph [0002] * * paragraph [0056] * * paragraph [0077] - paragraph [0082]; figures 6A-6C * | 1-3,13 | |

The present search report has been drawn up for all claims

| Place of search | Date of completion of the search | Examiner |
|---|---|---|
| The Hague | 14 April 2009 | Feldhoff, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 01 9590

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2009

| Patent document cited in search report | | Publication date | Patent family member(s) | | Publication date |
|---|---|---|---|---|---|
| US 2007029388 | A1 | 08-02-2007 | NONE | | |
| US 5792951 | A | 11-08-1998 | EP<br>US | 0663586 A1<br>5511415 A | 19-07-1995<br>30-04-1996 |
| US 5442957 | A | 22-08-1995 | NONE | | |
| US 2006155496 | A1 | 13-07-2006 | CN<br>EP<br>WO | 101087997 A<br>1839018 A1<br>2006076141 A1 | 12-12-2007<br>03-10-2007<br>20-07-2006 |
| US 2008267787 | A1 | 30-10-2008 | CA<br>CN<br>EP<br>US<br>US<br>WO | 2604695 A1<br>101184989 A<br>1875220 A2<br>2005249606 A1<br>2008257063 A1<br>2006110913 A2 | 19-10-2006<br>21-05-2008<br>09-01-2008<br>10-11-2005<br>23-10-2008<br>19-10-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10129300


**Non-patent literature cited in the description**

- **T.S.J. Lammerink.** *Sensors and Actuators A,* 1993, vol. 37 - 38, 45-50